# EUROPÄISCHE PATENTANMELDUNG

(11) **EP 2 998 805 A1**
(43) Veröffentlichungstag der Anmeldung: **23.03.2016**
(21) Anmeldenummer: 14185634.4
(22) Anmeldetag: 19.09.2014
(51) Int. Cl.: G05B 19/042, G05B 19/05, G05B 23/02, G06F 11/30, G06F 9/44

(54) **Verfahren und Vorrichtung zur Erzeugung eins Überwachungs-Funktionsbausteins für die Überwachung einer Automatisierungsanordnung**

(71) Anmelder: Siemens Aktiengesellschaft, 80333 München (DE)
(72) Erfinder: Gerber, Serge, 91086 Aurachtal (DE); Feigin, Wjatscheslaw, 90766 Fürth (DE); Rachinger, Bernd, 91575 Windsbach (DE); Opaterny, Thilo, 90453 Nürnberg (DE)

(57) **Zusammenfassung**

Die Erfindung betrifft ein Verfahren und ein Engineeringsystem zur Erzeugung von Programmcode und Funktionsbausteinen für die Überwachung von Betriebszuständen einer industriellen Automatisierungsanordnung, wobei ein Betriebsprogramm für eine Automatisierungskomponente durch ein Engineeringsystem mit einem Compiler erzeugt wird. Dabei wird durch einen Anwender in einer Überwachungstabelle jeweils zumindest ein zu überwachender Operand, zumindest eine Auslösebedingung und eine auszuführende Aktion, insbesondere eine auszugebende Meldung, für die Überwachung definiert. Durch den Compiler wird aus den in der Überwachungstabelle eingegebenen Informationen ein Überwachungs-Funktionsbaustein mit ausführbarem Programmcode erzeugt und in einen zyklisch oder ereignisgesteuert aufgerufenen Baustein, insbesondere einen Organisationsbaustein, des Betriebsprogramms eingefügt. Dadurch ist es möglich, Überwachungen übersichtlich mittels eines Tabelleneditors zu parametrieren, die dann direkt durch einen dafür vorgesehenen Compiler in ausführbare Funktionsbausteine übersetzt werden. Da Überwachungen damit wie Funktionsbausteine behandelt werden, hat der Anwender die volle Kontrolle darüber, wann und wie oft diese ausgeführt werden. Die Überwachungen können zudem wie andere Bausteine exportiert und wieder importiert werden.

## Beschreibung

Die Erfindung betrifft ein Verfahren zur Erzeugung von Programmcode für die Überwachung von Betriebszuständen einer industriellen Automatisierungsanordnung gemäß dem Oberbegriff des Patentanspruchs 1, und ein Engineeringsystem für die Erstellung von Programmcode für die Überwachung von Betriebszuständen einer industriellen Automatisierungsanordnung gemäß dem Oberbegriff des Patentanspruchs 9.

Bei der Prozess Diagnose geht es darum, das Personal, das eine industrielle Automatisierungsanordnung (kurz: Anlage) bedient oder "fährt", beim Betrieb zu unterstützen, da es vorkommenkann, dass die Anlage nicht genau wie vorgesehen arbeitet.

Die angesprochenen Anlagen werden von speicherprogrammierbaren Steuerungen gesteuert und kontrolliert. Die Erstellung des Betriebsprogramms (Steuerungsprogramm) ist meist aufwändig; ein nicht unwesentlicher Teil des Aufwandes besteht darin, den für die Prozessdiagnose nötigen Programmcode zu schreiben.

Auf Bedienpanels sollen dabei Meldungen (Fehlermeldungen, Warnungen etc.) ausgegeben werden. Dazu wird das Betriebsprogramm um zusätzlichen Programmcode erweitert, der mit der eigentlichen Steuerungsaufgabe nur indirekt zu tun hat. Die Programmierer können durch zusätzliche Abfragen im Programm dafür sorgen, dass Unregelmäßigkeiten, beispielsweise unplausible Sensorsignale, im laufenden Betrieb erkannt und gemeldet werden. Genauso können sie durch zusätzliche Programmzeilen Ausführungszeiten überwachen und dgl. Tritt eine Unregelmäßigkeit auf, so wird eine entsprechende Meldung vorbereitet und an das Bedienpanel versandt. Der Bediener kann dann Maßnahmen ergreifen, beispielsweise die Betriebsstörung beseitigen.

Beispielsweise kann definiert werden, welche Situationen im normalen Betrieb nicht vorkommen sollen, z.B. ein verklebter Geber und der daraus resultierende falsche Input. Für diesen Störfall kann innerhalb einer explizit ausprogrammierten Funktion eine Erkennungsroutine implementiert werden. Treten dann im späteren Betrieb unplausible, nicht vorgesehene Inputvektoren auf, so generiert die Funktion eine Meldung oder einen Alarm und gibt diese als Rückgabewert (Output) zurück.

Um in großen Anlagen einen sicheren und stabilen Betrieb zu gewährleisten, müssen entsprechend viele Überwachungen programmiert werden. Der für die Überwachungen nötige Code ist dabei oft sehr ähnlich. Die Programmierer müssen also immer wieder ähnliche Sequenzen schreiben, die sich letztlich über das gesamte Programm verteilen. Dies ist fehlerträchtig, kostet viel Zeit und ist schlecht wartbar.

Es ist daher eine Aufgabe der vorliegenden Erfindung, die Erstellung und Handhabung von Programmcode, mit dem Zustände von industriellen Automatisierungskomponenten überwacht werden, zu vereinfachen.

Die Lösung dieser Aufgabe sieht vor, dass der Programmcode für die Prozessdiagnose in Funktions-Bausteinen konzentriert wird. Die Überwachungen werden im Wesentlichen mittels eines Tabelleneditors definiert und damit seitens des Anwenders "programmiert", indem diese Überwachungen in einer Überwachungstabelle oder einer ähnlichen Informationseinheit parametriert werden. Ein Compiler übersetzt die Tabellen danach direkt in für die Automatisierungskomponente (z.B. SPS - Speicherprogrammierbare Steuerung) ausführbare Funktionsbausteine. Das Engineeringsystem sorgt weiter dafür, dass die dabei erzeugten Funktionsbausteine zyklisch oder ereignisgesteuert abgearbeitet werden, beispielsweise während des Ausführens eines zyklisch aufgerufenen Organisationsbausteins.

Die Lösung der Ausgabe sieht insbesondere ein Verfahren nach Patentanspruch 1 und ein Engineeringsystem nach Patentanspruch 9 vor.

Dabei wird ein Verfahren zur Erzeugung von Programmcode für die Überwachung von Betriebszuständen einer industriellen Automatisierungsanordnung vorgeschlagen, wobei ein Betriebsprogramm für eine Automatisierungskomponente der industriellen Automatisierungsanordnung durch ein Engineeringsystem mit einem Compiler erzeugt wird. Dabei wird durch einen Anwender in einer Überwachungstabelle jeweils zumindest ein zu überwachender Operand, zumindest eine Auslösebedingung für die Erzeugung eines Überwachungsereignisses und eine bei Eintritt des Überwachungsereignisses auszugebende Meldung für die Überwachung definiert, wonach durch den Compiler aus den in der Überwachungstabelle eingegebenen Informationen ein Überwachungs-Funktionsbaustein mit ausführbarem Programmcode erzeugt und dieser Überwachungs-Funktionsbaustein oder ein Aufrufbefehl zu diesem in einen zur Laufzeit zyklisch oder ereignisgesteuert aufgerufenen Baustein, insbesondere einen Organisationsbaustein, des Betriebsprogramms eingefügt wird. Dadurch ist es möglich, Überwachungen übersichtlich mittels eines Tabelleneditors zu parametrieren. Diese Überwachungstabellen können dann direkt durch einen dafür vorgesehenen Compiler in ausführbare Funktionsbausteine übersetzt werden. Für den Anlagenersteller benötigt die Erstellung der Überwachung damit weniger Zeit, das Programm wird übersichtlicher, kürzer und ist somit einfacher zu warten. Da Überwachungen wie Funktionsbausteine, nur mit Überwachungstabellen als eine Art "spezieller Programmiersprache", behandelt werden, hat der Anwender die volle Kontrolle darüber, wann und wie oft diese ausgeführt werden. Die Überwachungen können zudem wie andere Bausteine exportiert und wieder importiert werden.

Die Lösung der Aufgabe sieht außerdem ein Engineeringsystem für die Erstellung von Programmcode für die Überwachung von Betriebszuständen einer industriellen Automatisierungsanordnung vor, wobei das Engineeringsystem zur Erzeugung eines Betriebsprogramms für eine Automatisierungskomponente dieser industriellen Automatisierungsanordnung eingerichtet ist, und wobei das Engineeringsystem zumindest einen Editor zur Erstellung und Bearbeitung von Quellcode und einen Compiler zur Erzeugung von ausführbarem Programmcode umfasst. Dabei ist der Editor zur Eingabe und Bearbeitung von Überwachungsaufträgen in Form von Überwachungstabellen und der Compiler zur Erzeugung eines Überwachungs-Funktionsbausteins mit ausführbarem Programmcode anhand der in der Überwachungstabelle definierten Überwachungsvorgängen gemäß einem der vorstehenden Patentansprüche eingerichtet, und der Compiler ist zur Erzeugung von ausführbarem Programmcode im Sinne von "Überwachungs-Funktionsbausteinen" eingerichtet. Mit einem solchen Engineeringsystem lassen sich die im Zusammenhang mit dem Verfahren beschriebenen Vorteile erzielen.

Vorteilhafte Ausgestaltungen des erfindungsgemäßen Verfahrens sind in den abhängigen Patentansprüchen angegeben. Die dabei beschriebenen Merkmale und deren Vorteile gelten sinngemäß auch für das erfindungsgemäße Engineeringsystem. Die beschriebenen vorteilhaften Ausgestaltungen können sowohl einzeln, als auch in Kombination miteinander angewendet werden.

Vorteilhaft ist es, die Durchführung der Überwachung, also das "Zeitraster", in welchem die Überwachungsbedingungen ausgewertet werden, nicht an den Aufruf eines überwachten Funktionsbaustein zu koppeln, sondern an einen zyklisch aufgerufenen Baustein, einen sog. Organisationsbaustein. Wenn, wie üblich, für die Abarbeitung des Betriebsprogramms der Automatisierungskomponente eine Anzahl Ablaufebenen vorgesehen sind, zu denen jeweils ein zugeordneter Baustein, insbesondere Organisationsbaustein, in einem eigenen Zyklus oder von einem unterschiedlichen Ereignis gesteuert aufgerufen wird, wobei für das Betriebsprogramm eine Mehrzahl Überwachungstabellen vorgesehen werden und jede dieser Überwachungstabellen und damit die darin jeweils definierten Überwachungsvorgänge einer dieser Ablaufebenen zugeordnet wird, kann also vorteilhaft jeweils einem der jeweiligen Ablaufebene zugeordneten Baustein, insbesondere Organisationsbaustein, der Überwachungs-Funktionsbaustein mit dem ausführbarem Programmcode, der aus den gesamten Inhalten der jeweiligen Überwachungstabelle erzeugt wird, oder ein Aufrufbefehl zu diesem Programmcode, hinzugefügt werden.

Das Verfahren kann vorteilhaft in Strukturen mit hierarchischer Gliederung eingesetzt werden. Dies bedeutet, dass zumindest ein übergeordneter Programmbaustein existiert, der oft auch als Organisationsbaustein bezeichnet wird. In diesem übergeordneten Programmbaustein sind dann Aufrufe für untergeordnete Programmbausteine, also andere Bausteine, Funktionen etc., enthalten. Für diese aus der übergeordneten Struktur heraus aufgerufenen Programmbausteine werden zumindest in den Fällen, in denen ein solcher Funktionsbaustein oder dgl. zu überwachen ist und dieser eine zu überwachende lokale (nicht temporäre) Variable aufweist, für diesen Funktionsbaustein eine eigene Überwachungstabelle erzeugt. In den Fällen, in denen in einem übergeordneten Funktionsbaustein oder Organisationsbaustein eine lokale Instanz eines zu überwachenden Funktionsbausteins instanziiert wird oder ein Aufrufbefehl zu einem solchen in den übergeordneten Funktionsbaustein oder Organisationsbaustein eingefügt wird, sollen die Überwachungen aus der Überwachungstabelle dieses Funktionsbausteins der Überwachungstabelle des jeweiligen übergeordneten Funktionsbausteins zugeordnet werden. Natürlich wird dabei sichergestellt, dass beim "kopieren" der Überwachungsaufträge in eine übergeordnete Überwachungstabelle die betreffende Überwachung im laufenden Betrieb nicht doppelt ausgeführt wird. Außerdem wird dabei vorausgesetzt, dass zu überwachende Variablen, Operanden etc. der untergeordneten Programmbausteine global definiert sind, d.h., dass deren Inhalt beim Abarbeiten des Überwachungs-Funktionsbaustein, der im Kontext des übergeordneten Funktionsbausteins oder Organisationsbausteins ausgeführt wird, die entsprechenden Inhalte auch durch den Überwachungs-Funktionsbaustein zugreifbar bzw. lesbar sind. Diese "rekursive Propagierung" der Überwachungsaufträge untergeordneter Funktionsbausteine etc. an die jeweils übergeordnete, aufrufende Struktur sorgt dafür, dass nur wenige oder, im Falle des Anknüpfens der Überwachungen an nur eine Ablaufebene und damit nur einen Organisationsbaustein, alle Überwachungen in nur einer Tabelle übersichtlich eingesehen und bearbeitet werden können.

Vorteilhaft umfasst die Überwachungstabelle eine von einem Benutzer editierbare Informationseinheit mit mehreren Datenfeldern für die Informationen eines jeweiligen Überwachungsauftrages, wobei die Überwachungstabelle mehrere Zeilen, Blätter oder sonstige Informationseinheiten für die Eingabe mehrerer Überwachungsaufträge umfasst. Diese Überwachungstabelle führt also durch das "Make" zu Programmcode, so dass die Definition von Programmcode via solcher Tabellen als eine eigene, einfache und effektive Programmiersprache wirkt.

In den Fällen, in denen eine komplexere Auslösebedingung in einem Eintrag (z.B. Zeile) der Überwachungstabelle definiert werden soll, kann die Überwachungstabelle für die Auslösebedingung zumindest einer Überwachung einen Verweis zu einem Eingabefeld enthält, wobei mittels dieses Eingabefeldes die Auslösebedingung eingebbar oder editierbar ist. Dadurch ist kann nach Art einer "Lupe" oder anderer Eingabemittel dann ein größeres "Programmierfenster" geöffnet werden. Vorteilhaft ist das sich dabei öffnende Eingabefeld ein Programmeditor-Fenster für Programmcode in einer Programmiersprache für speicherprogrammierbare Steuerungen ist. Das ermöglicht es einem Programmierer, die Auswertelogik in einer ihm vertrauten Programmiersprache zu definieren.

Die im Falle eines Ereignisses auszugebenden Alarmtexte, Fehlermeldungen oder dgl. sind vorteilhaft "dynamisierbar", indem die Überwachungstabelle für zumindest einen darin definierten Überwachungsvorgang mit einem bei Eintritt der Auslösebedingung auszugebenden Fehlertext oder eine Fehlerinformation versehen wird, wobei der Fehlertext oder die Fehlerinformation zumindest einen Platzhalter für einen zur Laufzeit zu aktualisierenden Wert eines Operanden oder einer Variablen umfasst.

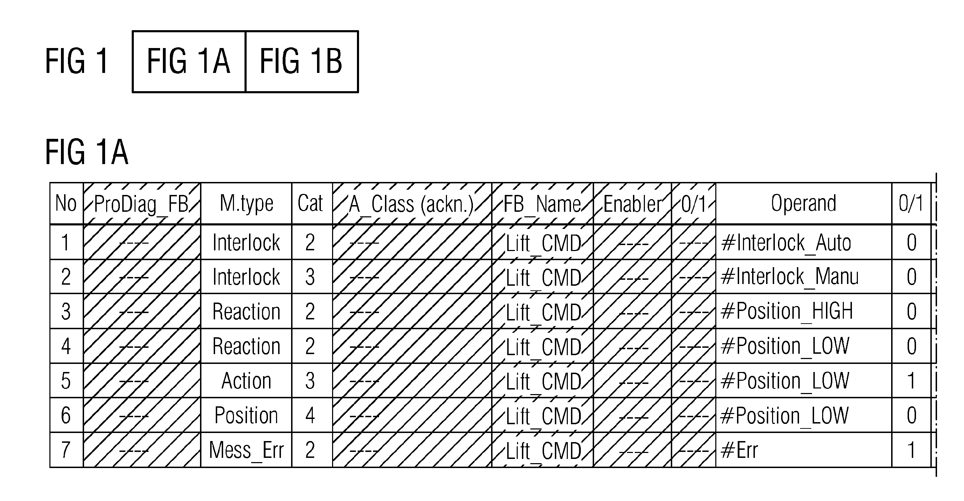

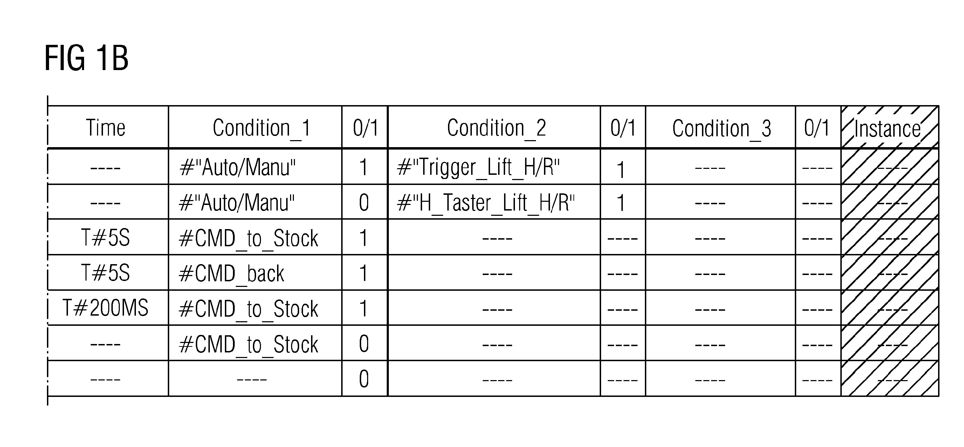

Ausführungsbeispiele des erfindungsgemäßen Verfahrens werden nachfolgend anhand der Zeichnung erläutert. Sie dienen gleichzeitig der Erläuterung eines erfindungsgemäßen Engineeringsystems.

Dabei zeigt die einzige Figur ausschnittsweise eine Überwachungstabelle, die vom Engineeringsystem in zumindest einen ausführbaren Überwachungs-Funktionsbaustein übersetzbar ist.

Wie im Stand der Technik steht zu Beginn der Erstellung einer Überwachung auch beim erfindungsgemäßen Verfahren eine Analyse darüber, welche Situationen im normalen Betrieb nicht vorkommen sollen, z.B. ein verklebter Geber und der daraus resultierende falsche Input.

Beispielsweise wird dabei eine erste Bedingung definiert, die nur für einen gewissen Zeitraum erfüllt sein darf. Wird diese Zeit überschritten, so ist die zweite Bedingung erfüllt und ein Alarm wird ausgelöst. Der Alarm hat eine Nummer und einen Meldetext. Dieser Text kann um Werte aus dem Prozess angereichert werden.

Im einfachsten Fall ist die erste Bedingung der Wert einer globalen booleschen Variablen und die zweite Bedingung ist die Zeit, die diese Variable "true" sein darf. Wird die Überwachung durch den Anwender implementiert, so gibt er damit auch vor wie oft der Code der Überwachung pro Sekunde ausgeführt wird. Da eine SPS ein Echtzeitbetriebssystem hat, und der Anwender die Bausteine bestimmten Tasks zuordnet, kann er bestimmen, wann und damit auch wie oft der Baustein ausgeführt wird.

Wird die Überwachung nicht, wie im Stand der Technik, durch den Anwender innerhalb eines Funktionsbausteins oder dgl. realisiert, sondern erfindungsgemäß durch Tabellen parametriert, so fehlt diese Information. Die Erfindung schlägt dazu vor, dass der Überwachungs-Funktionsbaustein, der durch den Compiler aus der Tabelle entsteht, wie jeder andere Baustein auch innerhalb des Tasksystem der Automatisierungskomponente aufgerufen wird.

Der Überwachungs-Funktionsbaustein wird also statt in KOP, SCL oder einer anderen bekannten Programmiersprache nach der Norm IEC 61131 als Überwachungstabelle definiert oder "programmiert". Statt einen der bekannten Programmierspracheneditoren zu verwenden, wird dieser Baustein beispielsweise mit einem Tabelleneditor geöffnet.

Da es sich aus Sicht der Automatisierungskomponente (SPS) aber trotz der Darstellung durch eine Tabelle um einen Code-Baustein handelt, kann dieser wie alle anderen Codebausteine vom Anwender aufgerufen und ausgeführt werden. Damit hat der Anwender weiterhin die volle Kontrolle darüber, wann und wie oft die Überwachung ausgeführt wird. Wenn es nötig ist, kann der Anwender mehrere dieser Bausteine deklarieren und diese in unterschiedlichen Ablaufebenen verwenden. Zum Beispiel kann er einen Teil der Überwachungen alle 100ms ausführen, andere aber nur alle 10 Sekunden.

Da für die Überwachung oft Zeit eine wichtige Rolle spielt, kann dem Überwachungs-Funktionsbaustein vorteilhaft globaler Speicher zugeordnet werden. Andernfalls kann möglicherweise nicht bestimmt werden, wieviel Zeit zwischen zwei Aufrufen der Überwachung vergangen ist. D.h., die Überwachung wird vorteilhaft als Funktionsbaustein realisiert, dem eine Instanz in Form eines Datenbausteins zugeordnet ist. Alternativ kann auch eine Funktion, d.h. ein Konstrukt ohne Datenbaustein erzeugt werden; im weiteren Kontext soll der Begriff "Überwachungs-Funktionsbaustein" beides bezeichnen.

Komplexe Auslöse-Bedingungen können dadurch realisiert werden, dass der Anwender diese mittels eines KOP Netzwerkes oder einer SCL Sequenz oder einer anderen Programmiersprache realisiert und in einer Variablen ablegt. Im Tabelleneditor wird dann wiederum diese Variable referenziert. Es wird dabei vorgeschlagen, dass ein sogenannter "Lupen"-Editor für die Bedingung in einer der bekannten Programmiersprachen der 61131 geöffnet wird.

Es gibt zwei mögliche Wege, um beim Editieren eines Betriebsprogramms ("PLC-Software-Engineering") zu einer überwachten Variablen zu kommen. Der Anwender kann zuerst eine Überwachungstabelle öffnen und darin einer weitere Zeile einen Operanden einfügen. Der Anwender kann aber auch zu einem Operanden angeben in welche Überwachungstabelle dieser eingefügt werden soll. Dazu gibt er die Art der Überwachung, die Zeit, die Meldung und gegebenenfalls Begleitwerte an.

Der Code für die Prozessdiagnose wird erfindungsgemäß in eigenen Funktionsbausteinen "konzentriert". Diese werden mittels einer speziellen Sprache gekennzeichnet. Diese Sprache führt zu einem Tabelleneditor, in dem die Überwachung durch den Kunden parametriert wird. Komplexe Bedingungen werden vorteilhaft durch "Netzwerklupen" formuliert. Ein Compiler übersetzt die Tabellen direkt in für die Automatisierungskomponente ausführbare Funktionsbausteine.

Die Tabelle enthält in einer vorteilhaften Ausgestaltung zumindest folgende Spalten:

### 1) Überwachter Operand.

Das ist eine Variable oder dgl., die überwacht werden soll. Dieses Feld kann auch als Einsprung in einen Lupen-Editor dienen, mit dem ein Netzwerk programmiert wird, dessen boolesches Resultat überwacht wird.

### 2) Überwachung.

Dies kann eine primäre Bedingung der Überwachung sein; beispielsweise kann eine Variable den Betriebszustand "Produktivbetrieb" beschreiben; dann wäre hier definiert, dass nur im Produktivbetrieb, nicht aber bei einem Testbetrieb überwacht werden soll.

### 3) Zeit.

Dies definiert die Zeit, die vom ersten Auslösen gewartet wird, bis die Meldung ausgegeben wird.

### 4) Meldungstext.

Der Text der Meldung.

### 5) Priorität.

Lösen mehrere Überwachungen aus, so werden die mit der höheren Priorität zuerst gemeldet.

### 6) Quittierung.

Dies gibt an, ob die Meldung quittiert werden muss. Muss sie quittiert werden, so bleibt die Meldung solange sichtbar, bis sie quittiert ist. Muss sie nicht quittiert werden, so verschwindet die Meldung sobald die Überwachungsbedingung nicht mehr erfüllt wird.

### 7) Begleitwert.

Ein Operand, der zum Aufbau der Fehlermeldung verwendet wird.

Neben diesen Spalten könnten weitere Spalten eingeblendet werden:

### 8) Zusätzliche Begleitwerte.

Dies sind beispielsweise weitere Operanden, die zum Aufbau der Fehlermeldung verwendet werden.

### 9) Weitere Operanden.

Neben der primären Bedingung können weitere Operanden angeben sein, die alle erfüllt werden müssen.

### 10) Weitere Überwachungen.

Im Meldungstext können Platzhalter vorgegeben sein, die durch die Begleitwerte ersetzt werden können. Dieses Verfahren ist aus der Programmiersprache C bekannt. Zum Beispiel gibt
*printf( "Geber75 gestört. Zeigt* %d *obwohl ein Füllstand von* %*d*%% *errechnet ist", geber75, fuellstand )*
den Text
*Geber75 gestört. Zeigt 0 obwohl ein Füllstand von* 75% *errechnet ist.*

Im Text dient das %-Zeichen als Platzhalter für die Ersetzung. Das dem %-Zeichen folgende Zeichen ist eine Formatierungsanweisung für die Variable. Welche Zeichen als Platzhalter und für die Formatierung verwendet werden ist nicht Teil dieser Erfindung.

Die weiteren Operanden mit den dazu gehörigen weiteren Überwachungen dienen dazu, die Häufigkeit, mit der man Netzwerke programmieren muss, zu verringern. In vielen Fällen möchte man einen Operanden nur überwachen, wenn das Programm in einem bestimmten Zustand ist. Zum Beispiel: Soll ein Füllstand von größer als 75% und kleiner als 90% nur überwacht werden, wenn der Prozess normal durchgeführt wird, also im "Produktivbetrieb". Bei einer Reinigung muss beispielsweise ein Kessel jedoch zu 100% gefüllt werden. Für diesen Fall reicht es aus, wenn die Überwachung zusätzlich eine Variable "Produktivbetrieb" auf 1 prüft. Während der Reinigung ist die Variable 0, damit löst die Überwachung nicht aus.

Die Überwachungstabellen können wie andere Bausteine exportiert und wieder importiert werden.

Das zuvor beschriebene Verfahren geht davon aus, dass globale Variablen überwacht werden sollen. Für lokale Variablen von Funktionsbausteinen ist dieses Verfahren jedoch nicht immer anwendbar. Es sei angenommen, eine Ein- oder Ausgangsvariable eines Funktionsbaustein soll überwacht werden. Das Problem ist, dass zum Zeitpunkt der Erstellung des Funktionsbausteins noch nicht bekannt ist, wie viele Instanzen dieses Bausteins später erzeugt werden.

Beispielsweise soll angenommen werden, der Funktionsbaustein habe einen Ausgang, der nur für 3 Sekunden TRUE sein darf. Wie bei globalen Variablen soll die Überwachung mittels des Tabelleneditors parametriert werden. Weiter sei angenommen, der Tabelleneditor wird so verwendet wie im Falle von globalen Variablen. Dann gibt es nur einen Unterschied, nämlich den Namen der Variablen. Da die Variable nur im Kontext des jeweiligen Funktionsbausteins gilt, bedeutet das jedoch auch, dass die lokale Überwachungs-Tabelle nur im Kontext des Funktionsbausteins gespeichert werden kann; anderenfalls wäre bei der Ausführung der Überwachung kein Zugriff auf die erforderlichen Daten möglich. Zwar können die Daten zur Überwachung in die lokalen statischen Daten der jeweiligen Instanz integriert werden. Damit kann dann auch die Überwachung im Kontext des Funktionsbausteinaufrufes ausgeführt werden. Der Anwender hat damit aber die Kontrolle darüber, wann und wie oft die Überwachung ausgeführt wird verloren. Andererseits ist es vorteilhaft, wenn bereits in der lokalen Überwachungstabelle eine Vorgabe für die später zu verwendende globale Überwachungstabelle angegeben werden kann, solange es möglich ist diese Zuordnung nachträglich zu ändern.

Wird nun später eine Instanz des Funktionsbausteins erzeugt, so entsteht eine globale Adresse für den zu überwachenden Operanden. Wird eine weitere Instanz des Funktionsbausteins erzeugt, so entsteht eine weitere globale Adresse für den zu überwachenden Operanden. In dem Augenblick, in dem die globale Adresse entsteht, kann die lokale Überwachung einem übergeordneten, beispielsweise "globalen" Überwachungsbaustein, wie er im vorherigen Ausführungsbeispiel beschrieben wird, hinzugefügt werden. Es entsteht damit ein Eintrag in einer globalen Überwachungstabelle. Dies kann erfindungsgemäß durch das Engineeringsystem gewährleistet werden. Dazu kann beispielsweise in dem Dialog, welcher zur Auswahl des Instanz-Namens verwendet wird, auch die globale Überwachungstabelle ausgewählt werden, wobei die Vorgabe aus der lokalen Tabelle voreingestellt ist, die durch den Anwender verändert werden kann.

Beim Erzeugen der globalen Überwachung werden alle Zellen oder Zeilen (oder sonstige Sichten) der lokalen Überwachung auf die globale Überwachung übertragen. Erzeugt ein Anwender mehrere Instanzen eines Funktionsbausteins, so bedeutet das zuerst einmal, dass diese Instanzen alle dieselbe Meldung ausgeben. Dies kann erwünscht sein. Ist dies jedoch nicht erwünscht, so kann bereits in der lokalen Meldung ein Platzhalter für den Namen der Instanz eingefügt werden. Dieser Platzhalter wird dann in der globalen Meldung den globalen Namen der Instanz zeigen, somit unterscheiden sich dann alle Meldungen, die aus dieser lokalen Überwachung entstehen.

Legt der Anwender jedoch eine lokale Instanz des Funktionsbausteins an, so kann die Überwachung immer noch nicht einem Baustein zugeordnet werden. Damit wird die Überwachung auf den "beherbergenden", übergeordneten Baustein vererbt. Enthält ein Funktionsbaustein mehrere Instanzen von gegebenenfalls unterschiedlichen Bausteinen mit Überwachungen, so übernimmt dieser Baustein alle Überwachungen aller seiner lokalen Instanzen. Dies kann sich rekursiv über mehrere Ebenen wiederholen. Erst wenn letztlich eine globale Instanz erzeugt wird, können alle Überwachungen einer globalen Überwachungstabelle zugeordnet werden.

Zur Vermeidung einer langwierigen "Frage-Antwort-Kaskade" sollten zuerst alle Überwachungen einer globalen Überwachungstabelle zugeordnet werden. Im folgendem muss es dann möglich sein, Überwachungen von einer Tabelle zu einer andern Tabelle zu verschieben. Es sollte jedoch verhindert werden, dass sich nun Überwachungen vervielfältigen.

Wird eine lokale Überwachung verändert, so wird diese nach außen an die globalen Tabellen weitergegeben. Wird die lokale Überwachung gelöscht, so wird dieses nach außen an die globalen Tabellen weitergegeben und die davon abhängigen globalen Überwachungen werden ebenfalls gelöscht.

Der Anwender kann die aus der lokalen Überwachung entstandene globale Meldung wie jede andere globale Meldung verändern. Bis auf den überwachten Operanden, der die Verbindung zur lokalen Überwachung im Funktionsbaustein darstellt, kann der Anwender alle anderen Zellen einer Überwachung ändern. Ist eine Zelle verändert, so wird deren Inhalt bei Änderung der lokalen Überwachung nicht nachgezogen. Unveränderte Zellen werden nachgezogen wenn in der lokalen Überwachungstabelle etwas geändert wird. Das Nachziehen der Zellen wird wie das Nachziehen der Startwerte einen Datenbausteins aus der Definition der Datentypen realisiert, stellt somit ein dem Anwender bekanntes Verhalten dar.

Für die Überwachung einer lokalen Variablen eines Funktionsbausteins wird erfindungsgemäß eine lokale Überwachungstabelle gespeichert. Wenn für den Funktionsbaustein eine lokale Instanz erzeugt wird, so wird die Überwachung an den "beherbergenden" Baustein bzw. dessen Überwachungstabelle weitergegeben. Wenn für den Funktionsbaustein eine globale Instanz erzeugt wird, so wird die Überwachung einer globalen Überwachungstabelle zugeordnet.

Beim Übersetzen der Bausteine wird die lokale Überwachung, deren globale Instanzen an globale Überwachungstabellen zugeordnet sind, wie globale Überwachungen durch den Compiler übersetzt.

Die aus den lokalen Überwachungen entstandenen globalen Überwachungen können zwischen den globalen Überwachungstabellen verschoben werden.

Die aus den lokalen Überwachungen entstandenen globalen Überwachungen können vom Anwender verändert werden. Dabei wird der aus dem Stand der Technik bekannte Mechanismus für Datenbausteine und anwenderdefinierte Datentypen an die Verwendung in Überwachungstabellen angepasst und erweitert. Die Erfindung ermöglicht es, fast alle Einträge, die aufgrund von lokalen Überwachungen in den globalen Überwachungstabellen entstanden sind, zu modifizieren. Die Ausnahme ist der überwachte Operand, da dieser die Verbindung zur lokalen Überwachung darstellt. Unveränderte globale Einträge werden bei Veränderung der lokalen Überwachung nachgezogen, veränderte nicht.

Zusammengefasst ergibt sich die Möglichkeit, lokale Überwachungen übersichtlich mittels eines Tabelleneditors zu parametrieren. Lokale Funktionsbaustein-Instanzen vererben ihre Überwachungen an den "beherbergenden" Baustein. Beim Erzeugen der globalen Instanz eines Bausteins werden die aufgesammelten Überwachungen einer globalen Überwachungstabelle zugeordnet. Es ist dabei aber möglich, Überwachungen zwischen Überwachungstabellen zu verschieben. Diese Überwachungstabellen werden durch einen dafür vorgesehenen Compiler in ausführbare Überwachungs-Funktionsbausteine übersetzt. Für den Anlagenersteller benötig die Erstellung der Überwachung damit weniger Zeit, das Programm wird übersichtlicher, kürzer und damit wartbarer. Da Überwachungen wie Funktionsbausteine mit einer speziellen Programmiersprache, nämlich einer Art Tabelle, behandelt werden, hat der Anwender die volle Kontrolle darüber, wann und wie oft diese ausgeführt werden.

## Patentansprüche

1. Verfahren zur Erzeugung von Programmcode für die Überwachung von Betriebszuständen einer industriellen Automatisierungsanordnung,
wobei ein Betriebsprogramm für eine Automatisierungskomponente der industriellen Automatisierungsanordnung durch ein Engineeringsystem mit einem Compiler erzeugt wird,
**dadurch gekennzeichnet, dass**
durch einen Anwender in einer Überwachungstabelle jeweils zumindest ein zu überwachender Operand, zumindest eine Auslösebedingung für die Erzeugung eines Überwachungsereignisses und eine bei Eintritt des Überwachungsereignisses auszuführende Aktion, insbesondere eine auszugebende Meldung, für die Überwachung definiert wird, und
dass durch den Compiler aus den in der Überwachungstabelle eingegebenen Informationen ein Überwachungs-Funktionsbaustein mit ausführbarem Programmcode erzeugt und dieser Überwachungs-Funktionsbaustein oder ein Aufrufbefehl zu diesem in einen zur Laufzeit zyklisch oder ereignisgesteuert aufgerufenen Baustein, insbesondere einen Organisationsbaustein, des Betriebsprogramms eingefügt wird.

2. Verfahren nach Patentanspruch 1,
**dadurch gekennzeichnet,**
**dass** zumindest in dem Fall, in dem ein Funktionsbaustein des Betriebsprogramms zu überwachen ist und dieser eine zu überwachende lokale Variable aufweist, für diesen Funktionsbaustein eine eigene Überwachungstabelle erzeugt wird.

3. Verfahren nach einem der vorhergehenden Patentansprüche,
**dadurch gekennzeichnet,**
**dass** für den Fall, dass in einem übergeordneten Funktionsbaustein oder Organisationsbaustein eine lokale Instanz eines zu überwachenden Funktionsbausteins instanziiert wird oder ein Aufrufbefehl zu einem solchen in den übergeordneten Funktionsbaustein oder Organisationsbaustein eingefügt wird, die Überwachungen aus der Überwachungstabelle dieses Funktionsbausteins der Überwachungstabelle des jeweiligen übergeordneten Funktionsbausteins zugeordnet werden.

4. Verfahren nach einem der vorhergehenden Patentansprüche,
**dadurch gekennzeichnet,**
**dass** die Überwachungstabelle eine von einem Benutzer editierbare Informationseinheit mit mehreren Datenfeldern für die Informationen eines jeweiligen Überwachungsauftrages umfasst, wobei die Überwachungstabelle mehrere Zeilen, Blätter oder sonstige Informationseinheiten für die Eingabe mehrerer Überwachungsaufträge umfasst.

5. Verfahren nach einem der vorhergehenden Patentansprüche,
**dadurch gekennzeichnet,**
**dass** die Überwachungstabelle für die Auslösebedingung zumindest einer Überwachung einen Verweis zu einem Eingabefeld enthält, wobei mittels dieses Eingabefeldes die Auslösebedingung eingebbar oder editierbar ist.

6. Verfahren nach Patentanspruch 5,
**dadurch gekennzeichnet, dass** das Eingabefeld ein Programmeditor-Fenster für Programmcode in einer Programmiersprache für speicherprogrammierbare Steuerungen ist.

7. Verfahren nach einem der vorhergehenden Patentansprüche,
**dadurch gekennzeichnet,**
**dass** die Überwachungstabelle für zumindest einen darin definierten Überwachungsvorgang mit einem bei Eintritt der Auslösebedingung auszugebenden Fehlertext oder eine Fehlerinformation versehen wird, wobei der Fehlertext oder die Fehlerinformation zumindest einen Platzhalter für einen zur Laufzeit zu aktualisierenden Wert eines Operanden oder einer Variablen umfasst.

8. Verfahren nach einem der vorhergehenden Patentansprüche,
**dadurch gekennzeichnet,**
**dass** für die Abarbeitung des Betriebsprogramms der Automatisierungskomponente eine Anzahl Ablaufebenen vorgesehen sind, zu denen jeweils ein zugeordneter Baustein, insbesondere Organisationsbaustein, in einem eigenen Zyklus oder von einem unterschiedlichen Ereignis gesteuert aufgerufen wird,
wobei für das Betriebsprogramm eine Mehrzahl Überwachungstabellen vorgesehen werden und jede dieser Überwachungstabellen und damit die darin jeweils definierten Überwachungsvorgänge einer dieser Ablaufebenen zugeordnet wird,
wobei jeweils einem der jeweiligen Ablaufebene zugeordneten Baustein, insbesondere Organisationsbaustein, der Überwachungs-Funktionsbaustein mit dem ausführbarem Programmcode, der aus den gesamten Inhalten der jeweiligen Überwachungstabelle erzeugt wird, oder ein Aufrufbefehl zu diesem Programmcode, hinzugefügt wird.

9. Engineeringsystem für die Erstellung von Programmcode für die Überwachung von Betriebszuständen einer industriellen Automatisierungsanordnung, wobei das Engineeringsystem zur Erzeugung eines Betriebsprogramms für eine Automatisierungskomponente dieser industriellen Automatisierungsanordnung eingerichtet ist,
wobei das Engineeringsystem zumindest einen Editor zur Erstellung und Bearbeitung von Quellcode und einen Compiler zur Erzeugung von ausführbarem Programmcode umfasst,
**dadurch gekennzeichnet,**
**dass** der Editor zur Eingabe und Bearbeitung von Überwachungsaufträgen in Form von Überwachungstabellen und der Compiler zur Erzeugung eines Überwachungs-Funktionsbausteins mit ausführbarem Programmcode anhand der in der Überwachungstabelle definierten Überwachungsvorgängen gemäß einem der vorstehenden Patentansprüche eingerichtet ist, und
**dass** der Compiler zur Erzeugung von ausführbarem Überwachungs-Programmcode aus den Inhalten der Überwachungstabellen eingerichtet ist.
